# EUROPÄISCHE PATENTSCHRIFT

(11) **EP 4 257 858 B1**
(45) Veröffentlichungstag und Bekanntmachung des Hinweises auf die Patenterteilung: **04.06.2025**
(21) Anmeldenummer: 22166497.2
(22) Anmeldetag: 04.04.2022
(51) Int. Cl.: F16L 3/12, F16L 3/24, F16L 55/035

(54) **VORRICHTUNG ZUR GERÄUSCHREDUZIERTEN BEFESTIGUNG VON ROHREN ODER SCHLÄUCHEN**
DEVICE FOR FIXING PIPES AND HOSES WHILE REDUCING NOISE
DISPOSITIF DE FIXATION À RÉDUCTION DE BRUIT POUR TUBES OU TUYAUX

(43) Veröffentlichungstag der Anmeldung: 11.10.2023
(73) Patentinhaber: WALTER STAUFFENBERG GMBH & CO. KG, 58791 Werdohl (DE)
(72) Erfinder: Schulz, Matthäus, 57439 Attendorn (DE); König, Ulrich Stefan, 58849 Herscheid (DE)
(74) Vertreter: Patentanwälte Dörner & Kötter PartG mbB

(56) Entgegenhaltungen:
- EP-A1- 0 553 765
- EP-A1- 1 111 285
- DE-A1- 102008 036 563
- DE-U1- 9 112 893
- US-A- 3 370 815

## Beschreibung

Die Erfindung betrifft eine Vorrichtung zur vibrations- und geräuschreduzierten Befestigung von Rohren oder Schläuchen nach dem Oberbegriff des Patentanspruchs 1.

Zur Befestigung von Rohren und Schläuchen werden regelmäßig so genannte Schellen eingesetzt, die regelmäßig einen Schellenkörper umfassen, der aus einem thermoplastischen oder elastomeren Kunststoff oder auch aus Metall hergestellt ist. Der Schellenkörper ist dabei häufig aus zwei miteinander verbindbaren Befestigungsteilen gebildet, die in montiertem Zustand eine Durchführung zur Aufnahme des Rohres beziehungsweise des Schlauches bilden. Zur Reduzierung von Vibrationen, die von dem aufgenommenen Rohr oder Schlauch auf den Schellenkörper übertragen werden, ist es bekannt, in der Durchführung des Schellenkörpers einen ringförmigen Gummieinsatz zur Aufnahme des Rohres beziehungsweise des Schlauches einzufügen. Eine solche Schelle ist beispielsweise in der WO 2015/177181 A1, der US 3 370 815 A, der DE 10 2008 036563 A1 sowie der EP 1 111 285 A1 beschrieben.

Die vorbekannte Lösung hat sich in der Praxis bewährt. Aufgabe der vorliegenden Erfindung ist es, eine Vorrichtung zur geräuschreduzierten Befestigung von Rohren oder Schläuchen bereitzustellen, die eine vereinfachte Montage ermöglicht und deren schall- und vibrationsreduzierenden Eigenschaften weiter verbessert sind. Gemäß der Erfindung wird diese Aufgabe durch eine Vorrichtung mit den Merkmalen des kennzeichnenden Teils des Patentanspruchs 1 gelöst.

Mit der Erfindung ist eine Vorrichtung zur vibrations- und geräuschreduzierten Befestigung von Rohren oder Schläuchen bereitgestellt, die eine vereinfachte Montage ermöglicht und deren schall- und vibrationsreduzierenden Eigenschaften weiter verbessert sind. Dadurch, dass der Schellenkörper durch einen Rohraufnahmeblock aus elastischem Material gebildet ist, der eine zylinderförmige Ausnehmung aufweist, welche die Durchführung bildet und in die ein in eine obere Deckfläche des Rohraufnahmeblocks eingebrachter Einführspalt (3) mündet, der sich in Axialrichtung der Ausnehmung über die gesamte obere Deckfläche erstreckt, ist die Einbringung eines Rohres oder eines Schlauchs in die Durchführung durch einfaches hindurchdrücken durch den Einführspalt ermöglicht. Durch das elastische Material des Rohraufnahmeblocks geben die den Spalt begrenzenden Seiten elastisch nach und nehmen anschließend ihre ursprüngliche Form an, wodurch das Rohr oder der Schlauch radial in der Durchführung fixiert ist. Durch die im Bereich des Einführspaltes offene Gestaltung des Rohraufnahmeblocks ist zudem eine gewisse Entkopplung des aufgenommenen Rohres oder Schlauchs ermöglicht, wodurch die schall- und vibrationsreduzierenden Eigenschaften verbessert sind. Zudem ist hierdurch die Kontaktfläche des Rohres vermindert und damit die Gefahr einer Kontaktkorrosion in diesem Bereich entgegengewirkt.

In Weiterbildung der Erfindung weist der Einführspalt einen trapezförmigen Querschnitt auf, der in Richtung der Ausnehmung sich verjüngend ausgebildet ist. Hierdurch ist das Einbringen eines Rohres oder Schlauchs in die Durchführung erleichtert.

In Ausgestaltung der Erfindung ist der Rohraufnahmeblock aus einem Elastomerwerkstoff hergestellt. Hierdurch ist eine hohe Elastizität des Rohraufnahmeblocks, verbunden mit guten schall- und vibrationsreduzierenden Eigenschaften erzielt.

In einer weiteren Ausgestaltung der Erfindung ist der Rohraufnahmeblock aus einem elektrisch leitenden Kunststoff, insbesondere einem intrinsisch leitfähigen Polymer hergestellt. Hierdurch ist eine elektrisch leitende Verbindung zwischen einem aufgenommenen Rohr und einer Anbaustruktur, an dem die Vorrichtung befestigt wird, erzielt, wodurch statische Aufladungen des Rohres verhindert sind. Eine solche elektrisch leitende Verbindung kann alternativ oder zusätzlich auch durch eine derartige Dimensionierung des Rohraufnahmeblocks und der Spalthöhe erzielt werden, bei der ein direkter Kontakt des aufgenommenen Rohres mit der Anbaustruktur, insbesondere mit einem C-Profil erfolgt.

In Weiterbildung der Erfindung sind in die Innenmantelfläche der Ausnehmung radial beabstandet zueinander, in Axialrichtung verlaufende Nuten eingebracht. Hierdurch ist die Kontaktfläche zwischen einem aufgenommenen Rohr und dem Rohraufnahmeblock vermindert wobei zugleich eine axiale Durchlüftung erzielt ist, wodurch Kontaktkorrosion an dem aufgenommenen Rohr vermieden ist.

In Ausgestaltung der Erfindung beschreibt der Querschnitt der Innenmantelfläche der Ausnehmung einen Kreisbogen, der einen Winkel α von zwischen 240° und 320° umspannt. Hierdurch ist eine einfache Einbringung eines Rohres in die Durchführung mit einer anschließenden zuverlässigen axialen Fixierung erzielt.

Erfindungsgemäß sind beidseitig der Ausnehmung parallel zueinander zwei Bohrungen eingebracht, durch die Schrauben geführt sind, die an ihrer dem Einführspalt zugewandten Seite in einen Spannkopf zum Einschieben in eine C-Profilschiene eingeschraubt sind. Hierdurch ist eine einfache Montage der Vorrichtung an einer C-Profilschiene ermöglicht, wobei die Spannköpfe einfach in die C-Profilschiene eingeschoben werden können. An der gewünschten Position kann der Rohraufnahmeblock sodann durch Anziehen der Schrauben fixiert werden.

Bevorzugt weist der Spannkopf einen Mutternkörper auf, an dem ein diesen auf zwei gegenüberliegenden Seiten überragendes Schlittenstück angeordnet ist. Hierdurch ist eine Gestaltung ähnlich eines Nutensteins erzielt.

In weiterer Ausgestaltung der Erfindung ist das Schlittenstück zumindest bereichsweise mit einer elastischen Schicht, vorzugsweise einer Elastomer- oder Gummischicht versehen. Hierdurch ist eine Entkopplung der Schrauben gegenüber einem C-Profil, in das der Spannkörper eingeschoben ist, bewirkt.

In Ausgestaltung der Erfindung ist auf der dem Einführspalt gegenüberliegenden Deckfläche des Rohraufnahmeblocks eine Platte aus einem gegenüber dem Material des Rohraufnahmeblocks unelastischerem, mechanisch stabilen Material, insbesondere aus Metall oder Hartkunststoff angeordnet, die zwei Bohrungen aufweist, die mit den Bohrungen des Rohraufnahmeblocks fluchten und durch welche die beiden Schrauben geführt sind. Hierdurch ist eine gleichmäßige Einleitung der auf die Schrauben einwirkenden Spannkräfte in dem Rohraufnahmeblock bewirkt, wodurch partielle Verformungen oder gar Beschädigungen vermieden sind.

In Weiterbildung der Erfindung ist eine C-Profilschiene angeordnet, in welche die mit den Schrauben verbundenen Spannköpfe eingeschoben sind, wobei die Schlittenkörper der Spannkörper in einem spitzen Winkel, vorzugsweise quer zu dem Profilschlitz in der C-Profilschiene angeordnet sind und der Mutternkörper durch den Profilschlitz hindurchragt. Hierdurch ist eine zuverlässige Verbindung zwischen der C-Profilschiene, die an einer Anbaustruktur montiert sein kann, erzielt, die durch einfaches temporäres Lösen der Schrauben eine Lagekorrektur entlang der C-Profilschiene ermöglicht.

Andere Weiterbildungen und Ausgestaltungen sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die schematische Darstellung einer Vorrichtung zur geräuschreduzierten Befestigung von Rohren oder Schläuchen
a) in räumlicher Darstellung von unten;
b) in räumlicher Darstellung von oben;
c) in der Seitenansicht;
- Figur 2: die schematische Darstellung einer an einem C-Profil montierten Vorrichtung zur geräuschreduzierten Befestigung von Rohren oder Schläuche in einer weiteren Ausführungsform in der Seitenansicht;
- Figur 3: die schematische Darstellung einer an einem C-Profil montierten Vorrichtung zur geräuschreduzierten Befestigung von Rohren oder Schläuchen in einer dritten Ausführungsform
a) in der Seitenansicht;
b) in räumlicher Darstellung von unten;

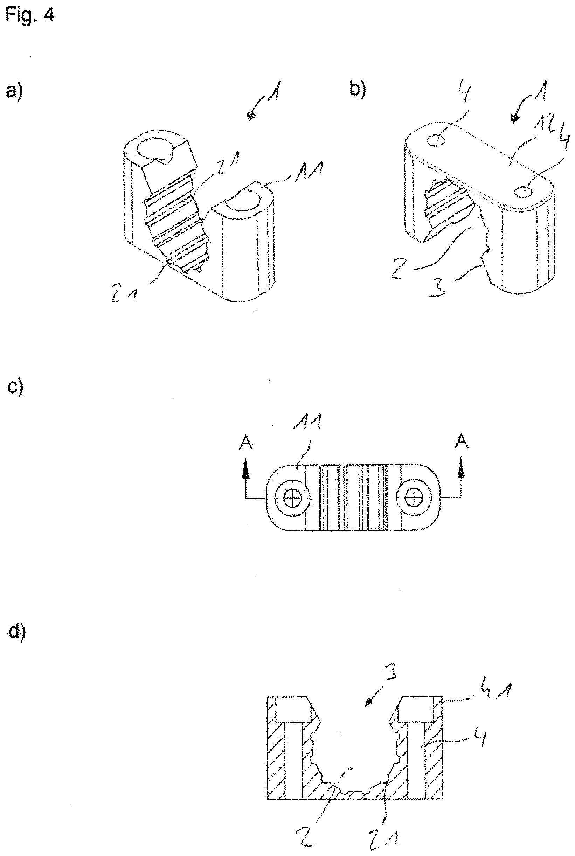

- Figur 4: die Darstellung des Rohraufnahmeblocks der Vorrichtung aus Figur 3
a) in räumlicher Darstellung von oben;
b) in räumlicher Darstellung von unten;
c) in der Draufsicht;
d) im Schnitt A-A;

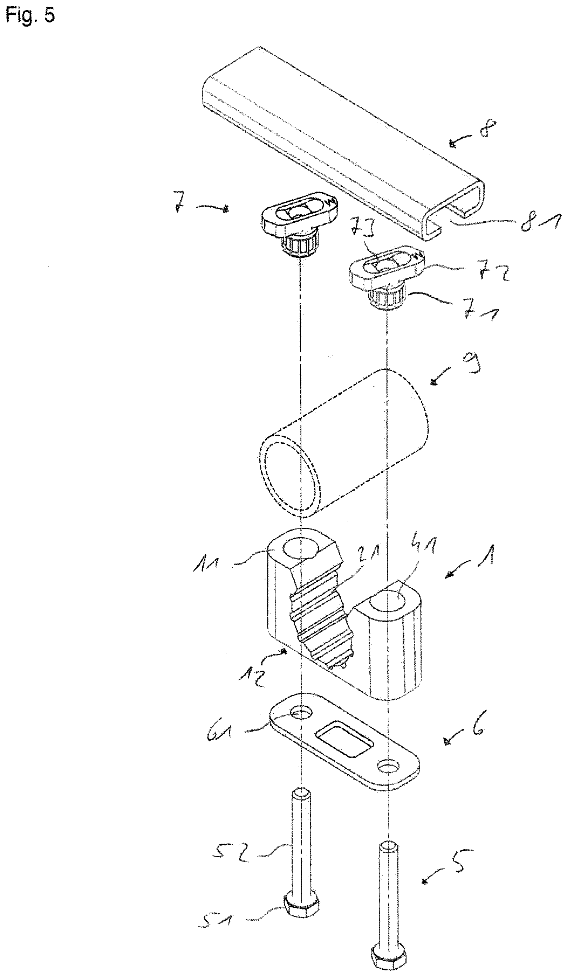

- Figur 5: die Anordnung aus Figur 3 in Explosionsdarstellung.

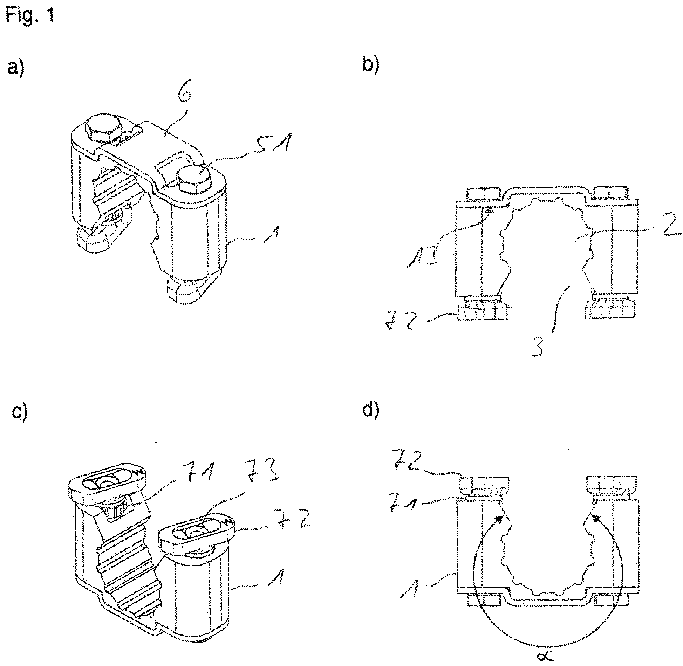

Die als Ausführungsbeispiel gewählte Vorrichtung zur geräuschreduzierten Befestigung von Rohren oder Schläuchen gemäß Figur 1 umfasst einen im Wesentlichen in Form eines Quaders mit abgerundeten Seitenkanten ausgebildeten Rohraufnahmeblock 1, der eine Durchführung in Form einer zylinderförmigen Ausnehmung 2 aufweist, in die ein Einführspalt 3 mündet, der in die obere Deckfläche 11 des Rohraufnahmeblocks 1 eingebracht ist. Der Einführspalt 3 weist einen trapezförmigen Querschnitt auf, der sich in Richtung der Ausnehmung 2 verjüngend ausgebildet ist. Der Querschnitt der Innenmantelfläche der Ausnehmung 2 beschreibt einen Kreisbogen, der im Ausführungsbeispiel einen Winkel α von 300° umspannt. In die Innenmantelfläche der Ausnehmung 2 sind umlaufend parallel, radial regelmäßig beabstandet zueinander angeordnete, in Axialrichtung verlaufende Nuten 21 eingebracht.

Zu beiden Seiten der Ausnehmung 2 ist in den Rohraufnahmeblock 1 jeweils eine Bohrung 4 zur Durchführung einer Schraube 5 eingebracht. Die dem Einführspalt 3 gegenüberliegende, untere Deckfläche 12 weist beidseitig der Ausnehmung 2 einen Absatz 13 auf, dessen Höhe etwa der Höhe des Schraubenkopfes 51 der Schrauben 5 entspricht. Der Rohraufnahmeblock 1 ist im Ausführungsbeispiel aus einem thermoplastischen Elastomer (TPE) hergestellt.

Auf der unteren Deckfläche 12 des Rohraufnahmeblocks 1 ist eine Platte 6 angeordnet, deren Außenkontur der Außenkontur der Deckfläche 12 entspricht, auf der sie flächig aufliegt. In die Platte sind zwei Bohrungen 61 eingebracht, die mit den Bohrungen 4 des Rohraufnahmeblocks 1 fluchten. Im Ausführungsbeispiel ist die Platte 6 als Metallblechstanzteil ausgebildet. Alternativ kann die Platte 6 auch aus gegenüber dem Material des Rohraufnahmeblocks 1 unelastischerem, mechanisch stabilem Hartkunststoff wie beispielsweise Polyoxymethylen (POM), Polyamid (PA) oder Polyethylenterephthalat (PET) hergestellt sein.

Durch die zueinander fluchtenden Bohrungen 4, 61 der Platte 6 und des Rohraufnahmeblocks 1 ist jeweils eine Schraube 5 geführt, deren Schraubenkopf 51 an der Platte 6 jeweils im Bereich eines Absatzes 13 der oberen Deckfläche 11 anliegt. Auf den gegenüberliegend aus der Bohrung 4 herausragenden Schraubenschaft 52 der beiden Schrauben 5 ist jeweils ein Spannkopf 7 aufgeschraubt.

Der Spannkopf 7 ist im Ausführungsbeispiel aus Metall hergestellt und weist einen Mutternkörper 71 auf, an dem ein diesen auf zwei gegenüberliegenden Seiten überragendes Schlittenstück 72 angeordnet ist. Alternativ kann der Spannkopf auch aus Kunststoff hergestellt sein. Das Schlittenstück 72 ist im Wesentlichen in Form eines Quaders mit abgerundeten Querseiten ausgebildet. Mittig weist das Schlittenstück 72 eine Bohrung 73 auf, die mit der Gewindebohrung des Mutternkörpers 71 fluchtet. Das Schlittenstück 72 ist im Ausführungsbeispiel mit einer Elastomerschicht versehen.

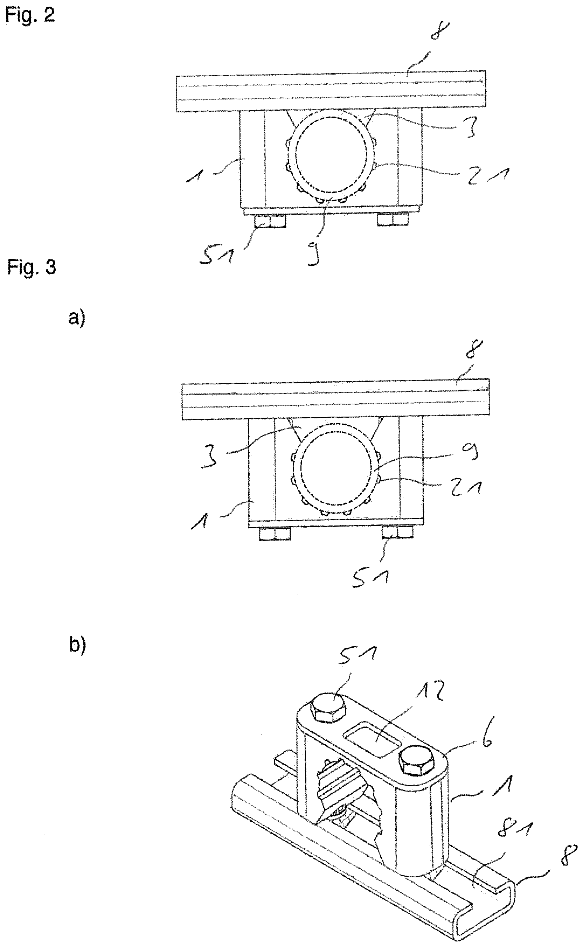

Im Ausführungsbeispiel gemäß Figur 2 ist der Rohraufnahmeblock 1 in einer verringerten Höhe und mit einer ebenen unteren Deckfläche 21 ausgebildet. Die an dieser Deckfläche 21 wiederum flächig anliegende Platte 6 ist ebenfalls eben ausgebildet. In die Ausnehmung 2 ist ein Rohr 9 eingebracht, dessen Außendurchmesser geringfügig größer ist, als der Innendurchmesser der Ausnehmung 2. Das Rohr 9 ist so kraft- und formschlüssig in dem Rohraufnahmeblock 1 gehalten. Die Schlittenstücke 72 der Spannköpfe 7 sind in eine C-Profilschiene 8 eingeschoben, wobei die Mutternkörper 71 durch deren Profilschlitz 81 hindurchragen. Endseitig sind die Mutternkörper in einem endseitigen, durchmessererweiterten Abschnitt 41 der Bohrungen 4 angeordnet.

Die Schlittenstücke 72 sind in der C-Profilschiene 8 etwa quer zum Profilschlitz 81 ausgerichtet und über die Schrauben 5 gegen die dem Rohraufnahmeblock 1 zugewandten Schenkel 82 der C-Profilschiene 8 verspannt, die so zwischen dem Rohraufnahmeblock 1 und den Schlittenstücken 72 eingespannt sind. Der Einführspalt 3 ist in diesem Ausführungsbeispiel derart dimensioniert, dass das Rohr 9 außen an den Schenkeln 82 der C-Profilschiene 8 anliegt, wodurch ein elektrisch leitender Kontakt zwischen Rohr 9 und C-Profilschiene 8 geschaffen ist.

Im Ausführungsbeispiel gemäß Figur 3 ist der Einführspalt 3 größer dimensioniert, wodurch das Rohr 9 beabstandet zur C-Profilschiene 8 ist. In dem zwischen Rohr 9 und C-Profilschiene 8 gebildeten Spalt ist eine Luftzirkulation ermöglicht. In diesem Ausführungsbeispiel weist die Platte 6 mittig eine im Wesentlichen rechteckförmige Ausnehmung auf. Diese Ausnehmung dient der Gewichts- und Materialreduzierung.

## Patentansprüche

1. Vorrichtung zur geräuschreduzierten Befestigung von Rohren oder Schläuchen, umfassend einen Schellenkörper, der eine Durchführung zur Aufnahme eines Rohr- oder Schlauchabschnitts aufweist, wobei der Schellenkörper durch einen Rohraufnahmeblock (1) aus elastischem Material gebildet ist, der eine zylinderförmige Ausnehmung (2) aufweist, welche die Durchführung bildet und in die ein in eine obere Deckfläche (11) des Rohraufnahmeblocks (1) eingebrachter Einführspalt (3) mündet, der sich in Axialrichtung der Ausnehmung (2) über die gesamte obere Deckfläche (11) erstreckt, **dadurch gekennzeichnet, dass** beidseitig der Ausnehmung (2) parallel zueinander zwei Bohrungen (4) eingebracht sind, durch die Schrauben (5) geführt sind, die an ihrer dem Einführspalt (3) zugewandten Seite in einen Spannkopf (7) zum Einschieben in eine C-Profilschiene (8) eingeschraubt sind.

2. Vorrichtung nach Anspruch 1, **dadurch gekennzeichnet, dass** der Einführspalt (3) einen trapezförmigen Querschnitt aufweist, der in Richtung der Ausnehmung (2) sich verjüngend ausgebildet ist

3. Vorrichtung nach Anspruch 1 oder 2, **dadurch gekennzeichnet, dass** der Rohraufnahmeblock (1) aus einem Elastomerwerkstoff oder aus einem elektrisch leitenden Kunststoff, insbesondere einem intrinsisch leitfähigen Polymer hergestellt ist.

4. Vorrichtung nach einem der vorgenannten Ansprüche, **dadurch gekennzeichnet, dass** in die Innenmantelfläche der Ausnehmung (2) radial beabstandet zueinander, in Axialrichtung verlaufende Nuten (21) eingebracht sind.

5. Vorrichtung nach einem der vorgenannten Ansprüche, **dadurch gekennzeichnet, dass** der Querschnitt der Innenmantelfläche der Ausnehmung (2) einen Kreisbogen beschreibt, der einen Winkel α von zwischen 240° und 320° umspannt.

6. Vorrichtung nach einem der vorgenannten Ansprüche, **dadurch gekennzeichnet, dass** der Spannkopf (7) einen Mutternkörper (71) aufweist, an dem ein diesen auf zwei gegenüberliegenden Seiten überragendes Schlittenstück (72) angeordnet ist.

7. Vorrichtung nach Anspruch 6, **dadurch gekennzeichnet, dass** das Schlittenstück (72) zumindest bereichsweise mit einer elastischen Schicht, vorzugsweise einer Elastomer- oder Gummischicht versehen ist.

8. Vorrichtung nach einem der vorgenannten Ansprüche, **dadurch gekennzeichnet, dass** auf der dem Einführspalt (3) gegenüberliegenden, unteren Deckfläche (12) des Rohraufnahmeblocks (1) eine Platte (6) aus einem gegenüber dem Material des Rohraufnahmeblocks unelastischerem Material, insbesondere aus Metall oder Hartkunststoff, angeordnet ist, die zwei Bohrungen (61) aufweist, die mit den Bohrungen (4) des Rohraufnahmeblocks (1) fluchten und durch welche die beiden Schrauben (5) geführt sind.

9. Vorrichtung nach einem der vorgenannten Ansprüche, **dadurch gekennzeichnet, dass** eine C-Profilschiene (8) angeordnet ist, in welche die mit den Schrauben (5) verbundenen Spannköpfe (7) eingeschoben sind, wobei die Schlittenkörper (72) der Spannkörper (7) in einem spitzen Winkel, vorzugsweise quer zu dem Profilschlitz (82) in der C-Profilschiene (8) angeordnet sind und der Mutternkörper (71) durch den Profilschlitz (81) hindurchragt.

## Claims

1. Device for noise-reduced fastening of pipes or hoses, comprising a clamp body, which has a passage for receiving a pipe or hose section, wherein the clamp body is formed by a pipe receiving block (1) made of elastic material, which has a cylinder-shaped recess (2), which forms the passage and into which leads an insertion gap (3) introduced into an upper cover surface (11) of the pipe receiving block (1), which extends over the entire upper cover surface (11) in the axial direction of the recess (2), **characterised in that** two bores (4) are inserted parallel to one another on both sides of the recess (2), through which screws (5) are guided, which are screwed into a clamping head (7) on their side facing the insertion gap (3) for insertion into a C-profile rail (8).

2. Device according to claim 1, **characterised in that** the insertion gap (3) has a trapezoidal cross-section, which tapers in the direction of the recess (2).

3. Device according to claim 1 or 2, **characterised in that** the pipe receiving block (1) is made of an elastomer material or of an electrically conductive plastic, in particular an intrinsically conductive polymer.

4. Device according to one of the preceding claims, **characterised in that** grooves (21) extending in the axial direction are introduced into the inner surface of the recess (2) at a radial distance from one another.

5. Device according to one of the preceding claims, **characterised in that** the cross-section of the inner surface of the recess (2) describes a circular arc, which spans an angle α of between 240° and 320°.

6. Device according to one of the preceding claims, **characterised in that** the clamping head (7) has a nut body (71), on which a carriage piece (72) is arranged projecting beyond it on two opposite sides.

7. Device according to claim 6, **characterised in that** the carriage piece (72) is provided at least in some areas with an elastic layer, preferably an elastomer or rubber layer.

8. Device according to one of the preceding claims, **characterised in that** on the lower cover surface (12) of the pipe receiving block (1) opposite the insertion gap (3) a plate (6) made of a material which is less elastic than the material of the pipe receiving block, in particular of metal or hard plastic, is arranged, which has two bores (61), which are aligned with the bores (4) of the pipe receiving block (1) and through which the two screws (5) are guided.

9. Device according to one of the preceding claims, **characterised in that** a C-profile rail (8) is arranged, into which the clamping heads (7) connected to the screws (5) are inserted, wherein the carriage bodies (72) of the clamping bodies (7) are arranged at an acute angle, preferably transversely to the profile slot (82) in the C-profile rail (8) and the nut body (71) projects through the profile slot (81).

## Revendications

1. Dispositif de fixation de tubes et tuyaux de manière à réduire le bruit, comprenant un corps de collier qui présente une traversée pour loger une section de tube ou de tuyau, sachant que le corps de collier est formé par un bloc de logement pour tube (1) en matériau élastique, qui présente un évidement cylindrique (2) formant la traversée et débouchant dans la fente d'introduction (3) qui est réalisée dans une surface de recouvrement supérieure (11) du bloc de logement pour tubes (1) et s'étend dans la direction axiale de l'évidement (2) sur toute la surface de recouvrement supérieure (11), **caractérisé en ce que** des deux côtés de l'évidement (2), deux orifices (4), à travers lesquels des vis (5) vissées dans une tête de serrage (7) sur leur côté tourné vers la fente d'introduction (3) pour être insérées dans un rail profilé en C (8) sont guidées, sont réalisés parallèlement l'un à l'autre.

2. Dispositif selon la revendication 1, **caractérisé en ce que** la fente d'introduction (3) présente une section transversale trapézoïdale formée avec un rétrécissement en direction de l'évidement (2).

3. Dispositif selon la revendication 1 ou 2, **caractérisé en ce que** le bloc de logement pour tube (1) est fabriqué en matériau élastomère ou en plastique conducteur d'électricité, en particulier en polymère conducteur intrinsèque.

4. Dispositif selon l'une des revendications précédentes, **caractérisé en ce que** des rainures en direction axiale (21) écartées radialement l'une de l'autre sont réalisées dans la surface interne de l'évidement (2).

5. Dispositif selon l'une des revendications précédentes, **caractérisé en ce que** la section transversale de la surface interne de l'évidement (2) décrit un cercle qui couvre un angle « α » de 240° à 320°.

6. Dispositif selon l'une des revendications précédentes, **caractérisé en ce que** la tête de serrage (7) présente un corps d'écrou (71) sur lequel un morceau de chariot (72) qui en dépasse de deux côtés opposés est disposé.

7. Dispositif selon la revendication 6, **caractérisé en ce que** le morceau de chariot (72) est au moins en partie doté d'une couche élastique, de préférence d'une couche en élastomère ou en caoutchouc.

8. Dispositif selon l'une des revendications précédentes, **caractérisé en ce qu'**une plaque (6) en matériau moins élastique que celui du bloc de logement pour tubes, en particulier en métal ou en plastique dur, qui présente deux orifices (61) alignés sur les orifices (4) du bloc de logement pour tubes (1) et à travers lesquels les deux vis (5) sont guidées, est disposée sur la surface de recouvrement inférieure (12) du bloc de logement pour tubes (1) située en face de la fente d'introduction (3).

9. Dispositif selon l'une des revendications précédentes, **caractérisé en ce qu'**un rail profilé en C (8) dans lequel les têtes de serrage (7) reliées aux vis (5) sont insérées est disposé, sachant que les corps de chariots (72) des corps de serrage (7) sont disposés en angle aigu, de préférence perpendiculairement à la fente du profilé (82), dans le rail profilé C (8) et que le corps d'écrou (71) dépasse à travers la fente profilée (81).
